# EUROPEAN PATENT SPECIFICATION

(11) **EP 2 551 367 B1**
(45) Date of publication and mention of the grant of the patent: **18.09.2013**
(21) Application number: 12176956.6
(22) Date of filing: 18.07.2012
(51) Int. Cl.: C22C 38/06, C22C 38/08, C22C 38/18, B29C 33/38, C21D 6/00

(54) **Prehardened steel for mold for plastic molding**
Vorgehärteter Stahl für eine Form für Kunststoffgießen
Prédurcissement d'acier pour moule pour moulage de plastique

(30) Priority: 19.07.2011 JP 2011157331
(43) Date of publication of application: 30.01.2013
(73) Proprietor: Daido Steel Co.,Ltd., Nagoya Aichi 461-8581 (JP)
(72) Inventor: IBUKI, Motohiro, Nagoya-shi, Aichi 457-8545 (JP); KAWANO, Masamichi, Nagoya-shi, Aichi 457-8545 (JP); HOBO, Makoto, Nagoya-shi, Aichi 457-8545 (JP)
(74) Representative: Diehl & Partner GbR

(56) References cited:
- JP-A- 5 070 887
- JP-A- 55 028 385
- JP-A- 61 213 349
- US-A- 5 639 421
- US-A- 5 785 924
- ROBERTS G ET AL: "MOLD STEELS", TOOL STEELS, ASM INTERNATIONAL, MATERIALS PARK, OH, US, vol. 5, 1 January 1998 (1998-01-01), pages 291-304, XP002133043,

## Description

### FIELD OF THE INVENTION

The present invention relates to a prehardened steel for molds for plastic molding which are used for molding, for example, parts to be used in TVs, personal computers, cell phones, etc.

### BACKGROUND OF THE INVENTION

Molded plastic articles have been used in various fields in recent years. In general, a molded plastic article is produced, for example, by introducing a heated and fluidized resin into the cavity of a mold for plastic molding, e.g., an injection mold, and then cooling and solidifying the resin to thereby mold the resin into the desired shape.

During the production of such molded plastic articles, a corrosive gas is apt to generate when the molding temperature is high or when a resin containing a flame retardant is used. In addition, lubricating oils used in cutting and other processing, sebaceous matter from the hands of the worker, etc. are apt to adhere to the molds for plastic molding. Steels for molds for plastic molding hence are required to have corrosion resistance so that the steels can be prevented from rusting to such a degree that the corrosion resistance does not raise difficulties in mold production therefrom.

In addition, from the standpoint of producing molded plastic articles, it is desired to mold a large number of products in a short period. Consequently, from the standpoint of repeating a heating/cooling operation for molding at a short cycle time, steels for molds for plastic molding are required to have a high coefficient of thermal conductivity.

Moreover, in general, for molding a large number of products in a short period as stated above, a technique in which the distance between the cooling water channel and the design surface of a mold is reduced is employed. In this case, since the portion of the mold which ranges from the cooling water channel to the design surface has a reduced thickness, there is a fear that the mold may suffer cracking due to a shock during molding, etc. Consequently, steels for molds for plastic molding are required to have a high impact value (impact resistance) which enables the molds to withstand shocks during the production of molded plastic articles.

Furthermore, there are plastic products which have no coating and in which the surface texture has been directly determined by the mold cavity surface. Since the products are required to have high surface quality, the mirror surface finishing properties of the mold cavity surface are an important factor. It is generally said that the higher the hardness of a steel for molds, the better the mirror surface finishing properties thereof. Consequently, a high hardness is required of steels for molds for plastic molding from the standpoint of ensuring excellent mirror surface finishing properties.

JP 05 070 887 discloses an age hardening steel for metal moulds for plastic moulding of 0.05-0.18 C, <1.0 Si, 0.5-2.0 Mn, 2.5-3.5 Ni, 0.1-0.4 Mo, 0.5-1.5 Al and 0.7-2.5 Cu as basic components. Meanwhile, patent document 1 discloses an age hardening type steel for molds, which contains, in terms of % by weight, 0.01-0.15% of C, 0.1-2.0% of Si, 0.5-2.0% of Mn, 2.1-5.0% of Cr, 2.0-3.5% ofNi, 0.7-1.5% of Cu, up to 0.09% of Mo, and 0.4-1.5% of A1, with the remainder being Fe and unavoidable impurities. The invention described in patent document 1 is an age hardening type steel for molds which has the above-mentioned alloy composition and which hence is prevented from coming to have scabs upon hot working, comes to have a hardness of 35-45 in terms of HRC through an aging treatment, and has excellent embossability, excellent corrosion resistance, and satisfactory nitriding characteristics.

Patent document 2 discloses a steel for molds for plastic molding, which contains, in terms of % by mass, 0.09-0.13% of C, 0.10-0.40% of Si, 0.30-0.80% of Mn, up to 0.030% of P, 0.80-1.20% of Cu, 2.50-3.50% ofNi, 2.0-3.0%, excluding 3.0%, of Cr, 0.10-0.40% of Mo, 0.50-1.50% of Al, up to 0.0200% ofN, and up to 0.0100% of O, with the remainder being Fe and unavoidable impurities. The invention described in patent document 2 has the above-mentioned alloy composition and satisfies specified requirements concerning C, Mn, and Cr, so that it has corrosion resistance and thermal conductivity and also can be inhibited from becoming undulated in finish polishing.

Patent Document 1: JP-A-63-76855
Patent Document 2: JP-A-2010-242147

Incidentally, the steels for molds described in patent document 1 and patent document 2 are steels generally called precipitation hardening type (or age hardening type) steels. A steel of this precipitation hardening type is a steel which is subjected to a solution heat treatment to thereby make the steel have an even martensitic or bainitic structure and is thereafter subjected to an aging treatment to form a fine precipitate, thereby causing precipitation hardening. In particular, in the case of steels for molds for plastic molding, Ni, Al, and Cu dissolved in the base are precipitated as intermetallic compounds in the base by the action of an aging treatment in which the steels are heated to about 500°C. The base is thus strengthened to thereby obtain a hardness of about 40 in terms of HRC.

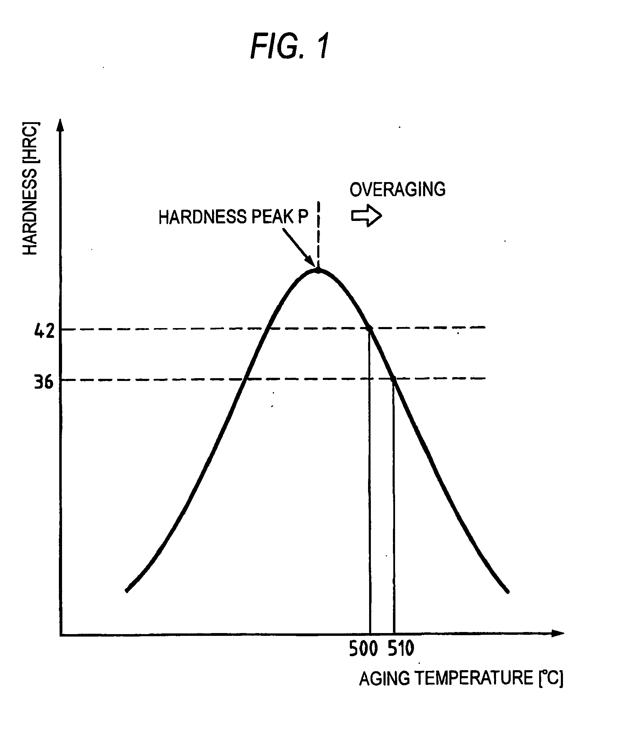

Fig. 1 is a presentation in which a relationship between hardness and aging temperature in a general steel of the precipitation hardening type is shown by a curve. This curve (hereinafter referred to as aging curve) indicates that as the aging temperature rises, Ni, which contributes most to hardness, combines with Al to form a fine precipitate, resulting in a peak P of hardness. Thereafter, the precipitate crystals grow and the hardness decreases as the aging temperature rises after the peak P. Namely, the aging curve in Fig. 1 comes to slope down to the right hand. From the standpoint of preventing mold breakage (cracking) due to the mold hardening which is caused by a thermal history that the mold undergoes during the molding (production) of plastic products, an operational aging temperature is determined with respect to the so-called overaging-side region of the aging curve which lies after the hardness peak P. Fig. 1 shows a relationship in which an aging temperature of 500-510°C should be used for obtaining a hardness of 36-42 in terms of HRC.

However, it is extremely difficult to precisely control the age hardening temperature for a steel for molds for plastic molding because of the nature of the operation. Specifically, since general steels of the precipitation hardening type show an aging curve in which the slope is steep on the overaging side, the range of aging temperatures for obtaining adequate hardness is narrow. In actual field operations, it is difficult to evenly conduct an aging treatment depending on environmental factors such as the size of the mold to be heat-treated, the heat treatment furnace, etc., and the narrowed aging temperature range can hence result in unevenness of the hardness of the mold obtained through the aging treatment. Consequently, the conventional steels for molds for plastic molding have had a problem that the molds produced therefrom through an aging treatment are apt to have unevenness in hardness, making it difficult to obtain stable hardness.

### SUMMARY OF THE INVENTION

The invention has been achieved in view of the problem described above. An object of the invention is to enable a prehardened steel for molds for plastic molding to give, through an aging treatment, a mold which has little unevenness in hardness while retaining mirror surface finishing properties, corrosion resistance, thermal conductivity, and impact resistance.

The present inventors diligently made investigations and, as a result, have found that the problem can be overcome. Specific means therefor are the following items 1 to 3.
1. A prehardened steel for molds for plastic molding, containing, in terms of % by mass,
   C: 0.09-0.13%,
   Si: 0.20-0.40%,
   Mn: 0.40-0.60%,
   P: up to 0.100%,
   Cr: 2.00-3.00%,
   Cu: 0.60-0.90%,
   Ni: 2.00-2.45%,
   Mo: 0.20-0.40%,
   Mo/Ni: ≥0.09,
   Al: 0.60-0.90%,
   O: up to 0.0100%, and
   N: up to 0.0100%,
   with the remainder being Fe and unavoidable impurities.

2. The prehardened steel for molds for plastic molding according to item 1 above, further containing, in terms of % by mass, one or more elements selected from
   S: 0.001-0.10%,
   Se: 0.001-0.3%,
   Te: 0.001-0.3%,
   Ca: 0.0002-0.10%,
   Pb: 0.001-0.20%, and
   Bi: 0.001-0.30%.

3. The prehardened steel for molds for plastic molding according to item 1 or 2 above, further containing, in terms of % by mass, one or more elements selected from
   V: 0.01-0.10%,
   Nb: 0.001-0.30%,
   Ta: 0.001-0.30%,
   Ti: up to 0.20%, and
   Zr: 0.001-0.30%.

According to the invention, the addition of molybdenum (Mo) and the addition of nickel (Ni) produce a synergistic effect to enable the precipitation hardening type steel to show an aging curve in which the slope is gentle on the overaging side, thereby widening the range of aging temperatures usable for obtaining adequate hardness. As a result, the mold obtained through an aging treatment has little unevenness in hardness. In addition, according to the invention, nickel is added in a smaller amount as compared with conventional steels, molybdenum is added in an amount necessary for obtaining the required hardness, and Mo/Ni ratio is regulated to 0.09 or more in order to attain an optimal balance between nickel addition amount and molybdenum addition amount.

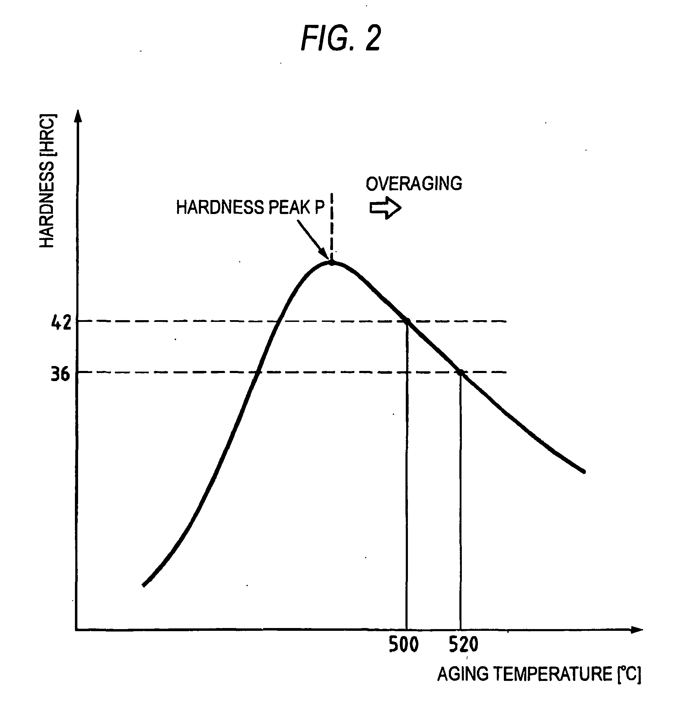

Fig. 2 is a presentation in which a relationship between hardness and aging temperature in a prehardened steel for molds for plastic molding according to the invention is shown by a curve. As shown in Fig. 2, in the prehardened steel for molds for plastic molding according to the invention, nickel (Ni) combines with aluminum (Al) to form a fine precipitate and thereby result in a hardness peak P, as in the case shown in Fig. 1. However, since the prehardened steel for molds for plastic molding according to the invention has a lower nickel content than the conventional steels, the slope of the aging curve thereof which lies immediately after the hardness peak P is gentle. In addition, the middle area of the aging curve which follows the region lying immediately after the hardness peak P has a gentle slope because the balance between the amount of nickel (Ni) added and the amount of molybdenum (Mo) added is optimized. The reason for this gentle slope is thought to be that a carbide of molybdenum precipitates a while after the hardness peak P due to the precipitate of nickel and aluminum and this molybdenum carbide precipitation renders the decrease in hardness on the overaging side gentle. Namely, it is possible to utilize the fact that precipitates of nickel and molybdenum, which contribute to hardness, are formed at different temperatures and to thereby widen the range of aging temperatures usable in the operation. In addition, since other elements are added in amounts within proper ranges, it is possible to maintain mirror surface finishing properties, corrosion resistance, thermal conductivity, and impact resistance.

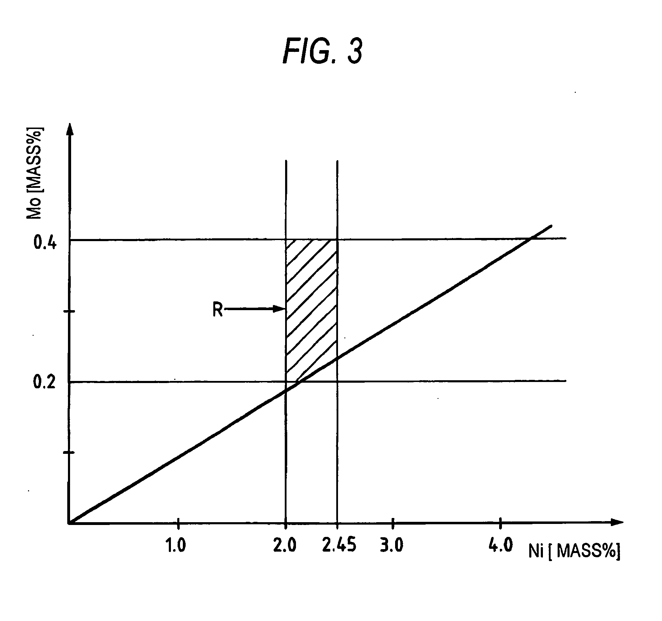

Fig. 3 shows a relationship between the amount of nickel added and the amount of molybdenum added in prehardened steels according to the invention for molds for plastic molding. The range R in Fig. 3 indicates the ranges of nickel and molybdenum addition amounts according to the invention.

Thus, the prehardened steel for molds for plastic molding according to the invention can give, through an aging treatment, a mold which has little unevenness in hardness while retaining mirror surface finishing properties, corrosion resistance, thermal conductivity, and impact resistance.

### BRIEF DESCRIPTION OF THE DRAWINGS

Fig. 1 is a presentation in which a relationship between hardness and aging temperature in a general steel of the precipitation hardening type is shown by a curve.
Fig. 2 is a presentation in which a relationship between hardness and aging temperature in a prehardened steel of the invention for molds for plastic molding is shown by a curve.
Fig. 3 is a presentation which shows a relationship between the amount of nickel added and the amount of molybdenum added in prehardened steels of the invention for molds for plastic molding.
Fig. 4 is a presentation which shows relationships between the amount of nickel added and the width of aging temperatures in developed steels and comparative steels.
Fig. 5 is a presentation in which the hardness values and test Nos. of comparative steel 6, comparative steel 10, and developed steel 10 are shown.
Fig. 6 is a presentation in which the impact values and test Nos. of comparative steel 6, comparative steel 10, and developed steel 10 are shown.

### DETAILED DESCRIPTION OF THE INVENTION

An embodiment of the prehardened steel for molds for plastic molding of the invention (hereinafter may also be referred to as "the present prehardened steel") is explained below in detail. Examples of applications of the present prehardened steel include molds for molding miscellaneous goods for daily use, exterior or interior parts or components for domestic electrical appliances, exterior or interior parts or components for OA appliances, exterior parts for cell phones, and interior or exterior parts and structural members for motor vehicles, motorcycles, and the like. Since the prehardened steel of the invention gives, through an aging treatment, a mold which has little unevenness in hardness, the present prehardened steel is applicable also to large molds (practically, molds of 40 kg or more), such as molds for molding, for example, lenses for the head lamps of large motor vehicles.

The present prehardened steel contains the following elements. The kinds of the elements added, ranges of the contents thereof, and reasons for the limitation thereof are as follows.

### C: 0.09-0.13%

Carbon (C) is an element necessary for ensuring strength and wear resistance. Carbon combines with carbide-forming elements, such as chromium (Cr), molybdenum (Mo), tungsten (W), vanadium (V), and niobium (Nb), to form carbides. Carbon, during quench-hardening, dissolves in the matrix phase and thereby forms a martensitic structure, and is therefore necessary also for ensuring hardness. From the standpoint of obtaining these effects, the lower limit of carbon content is 0.09%. On the other hand, in case where the content of carbon is too high, the carbide-forming elements combine with the carbon to form carbides containing chromium and molybdenum. As a result, the amount of the chromium and molybdenum dissolved in the matrix phase is reduced, resulting in reduced corrosion resistance. Consequently, the upper limit of carbon content is 0.13%.

### Si: 0.20-0.40%

Silicon (Si) is added mainly as a deoxidizer or as an element for improving machinability necessary for mold production. From the standpoint of obtaining these effects, the lower limit of silicon content is 0.20%. On the other hand, in case where the content of silicon is too high, reduced thermal conductivity results. From the standpoint of preventing this problem, the upper limit of silicon content is 0.40%. From the standpoints of further improving the coefficient of thermal conductivity, etc., the upper limit of silicon content is preferably 0.30%, more preferably 0.25%.

### Mn: 0.40-0.60%

Manganese (Mn) is added in order to improve suitability for quench-hardening or stabilize the austenite. In particular, since a decrease in suitability for quench-hardening results in enhanced unevenness in hardness on a microscopic level, the lower limit of manganese content is 0.40%. On the other hand, in case where the content of manganese is too high, vacuum melting results in an impaired yield. Consequently, the upper limit of manganese content is 0.60%.

### P: up to 0.100%

Phosphorus (P) is unavoidably contained in the steel. Phosphorus segregates at grain boundaries to cause a decrease in toughness. Consequently, the upper limit of phosphorus content is 0.100%.

### Cr: 2.00-3.00%

Chromium (Cr) is an element which improves corrosion resistance. From the standpoint of obtaining this effect, the lower limit of chromium content is 2.00%, and is preferably 2.60%. In case where the content of chromium is too high, reduced thermal conductivity results. From the standpoint of preventing this problem, the upper limit of chromium content is 3.00%, and is preferably 2.90%.

### Cu: 0.60-0.90%

Copper (Cu) is an element which precipitates and thereby enhances hardness. From the standpoint of obtaining this effect, the lower limit of copper content is 0.60%. On the other hand, in case where the content of copper is too high, reduced hot workability results. From the standpoint of preventing this problem, the upper limit of copper content is 0.90%.

### Ni: 2.00-2.45%

Nickel (Ni) is an element which forms an intermetallic compound with aluminum to form a precipitate of the compound and which thereby enhances hardness. From the standpoint of obtaining this effect, the lower limit of nickel content is 2.00%. On the other hand, in case where the content of nickel is too high, the precipitate grows too quickly and the decrease in hardness which occurs on the overaging side is rapid. Consequently, the upper limit of nickel content is 2.45%.

### Mo: 0.20-0.40%

Molybdenum (Mo) is an element which shifts the pearlite nose toward the longer-time side and which combines with carbides to precipitate and thereby contribute to hardness. From the standpoint of obtaining the effects, the lower limit of molybdenum content is 0.20%. On the other hand, even when the content of molybdenum is increased excessively, the effects are not heightened any more. In addition, since molybdenum is an expensive element, addition thereof in a large amount results in an increase in steel material cost. Consequently, the upper limit of molybdenum content is 0.40%.

### Mo/Ni: ≥0.09

The Ni-Al intermetallic compound which precipitates as a result of a combination of nickel with aluminum and the molybdenum carbide which precipitates as a result of a combination of molybdenum with carbon differ in precipitation temperature. Consequently, by adding nickel and molybdenum in combination in that proportion, the aging curve is made to have a gentle slope on the overaging side and the range of aging temperatures usable in the operation is widened. As a result, the steel, after an aging treatment, has little unevenness in hardness.

### Al: 0.60-0.90%

Aluminum (Al) is an element which combines with nickel to increase hardness through precipitation hardening. From the standpoint of obtaining this effect, the lower limit of aluminum content is 0.60%. In case where the content of aluminum is too high, reduced impact resistance results and mold cracking is apt to occur. From the standpoint of preventing this problem, the upper limit of aluminum content is 0.90%.

### O: up to 0.0100%

Oxygen (O) is an element which is unavoidably contained in the molten steel. However, in case where oxygen is contained excessively, the oxygen combines with silicon and aluminum to generate coarse oxides, and these oxides serve as inclusions to reduce toughness and mirror surface finishing properties. From the standpoint of preventing this problem, the upper limit of oxygen content is 0.0100%.

### N: up to 0.0100%

Nitrogen (N) is an element which is unavoidably contained in the molten steel. However, nitrogen combines with aluminum to form AlN, thereby reducing mirror surface finishing properties. From the standpoint of preventing this problem, the upper limit of nitrogen content is 0.0100%.

The present prehardened steel may further contain, besides the elements described above, any desired one or more elements selected from the following elements. The proportion of each element, reasons for limitation, etc. are as follows.

### 0.001-0.10% of S, 0.001-0.3% of Se, 0.001-0.3% of Te, 0.0002-0.10% of Ca, 0.001-0.20% ofPb, and 0.001-0.30% of Bi

Sulfur (S), selenium (Se), tellurium (Te), calcium (Ca), lead (Pb), and bismuth (Bi) each may be added in order to improve machinability. From the standpoint of obtaining this effect, the lower limit of sulfur content is 0.01%. From the same standpoint, the lower limit of selenium content is 0.001%. The lower limit of tellurium content is 0.001 %. The lower limit of calcium content is 0.0002%. The lower limit of lead content is 0.001 %. The lower limit of bismuth content is 0.001 %.

In case where the content of each of sulfur, selenium, tellurium, calcium, lead, and bismuth is too high, a decrease in machinability results. From the standpoint of preventing this problem, the upper limit of sulfur content is 0.10%. From the same standpoint, the upper limit of selenium content is 0.3%. The upper limit of tellurium content is 0.3%. The upper limit of calcium content is 0.10%. The upper limit of lead content is 0.20%. The upper limit of bismuth content is 0.30%.

### 0.01-0.10% of V, 0.001-0.30% ofNb, 0.001-0.30% of Ta, up to 0.20% of Ti, and 0.001-0.30% of Zr

Vanadium (V), niobium (Nb), tantalum (Ta), titanium (Ti), and zirconium (Zr) combine with carbon (C) and nitrogen (N) to form carbonitrides and thereby inhibit grains from coarsening. These elements hence are effective in improving mirror surface finishing properties. From the standpoint of obtaining this effect, the lower limit of vanadium content is 0.01 %. From the same standpoint, the lower limit of niobium content is 0.001 %. The lower limit of tantalum content is 0.001 %. The lower limit of zirconium content is 0.001%. There is no particular lower limit on the content of titanium.

In case where the content of each of vanadium, niobium, tantalum, titanium, and zirconium is too high, a deterioration in machinability results. From the standpoint of preventing this problem, the upper limit of vanadium content is 0.10%. From the same standpoint, the upper limit of niobium content is 0.30%. The upper limit of tantalum content is 0.30%. The upper limit of titanium content is 0.20%. The upper limit of zirconium content is 0.30%.

It is preferred that the present prehardened steel be regulated so as to have a hardness (Rockwell hardness) in the range of 36-42 HRC. The reasons for this are as follows. The prehardened steel having a hardness less than 36 HRC has insufficient hardness and hence enhanced surface roughness, resulting in reduced mirror surface finishing properties. On the other hand, in case where the steel has a hardness exceeding 42 HRC, this steel is too hard, resulting in a decrease in mold processability such as, for example, boring with an HSS drill.

### Examples

The invention will be explained below in more detail by reference to Examples.
Each of steels respectively having the chemical compositions (% by mass) shown in Table 1 (given later) was produced as a melt with a vacuum induction furnace and then cast to obtain a 50-kg ingot. The ingot obtained by casting was hot-forged to produce a bar material having a size of 60 mm square. This bar material was held under the heat treatment conditions (solution heat treatment temperature) shown in Table 2 (given later) and then quenched (quench-hardened). Various test pieces were cut out of the heat-treated bar materials and subjected to the following various tests.

### <Test for determining Aging Temperature Width>

Cubic test pieces having a side length of 10 mm were cut out of each heat-treated bar material and subjected to an 8-hour aging treatment at various temperatures. Thereafter, the test surface and grounding surface of each test piece were polished to #400. Subsequently, the test pieces were examined with a Rockwell scale C to determine temperatures which had resulted in a hardness of 36-42 HRC. The range of these temperatures (temperature width) was determined. This temperature width means the overaging-side temperature width within the aging curve. In the case where the test pieces had a temperature width of 20°C or more in this test, this steel was rated as effective in widening the range of usable aging temperatures.

### <Hardness Measurement Test>

A cubic test piece having a side length of 10 mm was cut out of each heat-treated bar material and treated under the heat treatment conditions (aging temperature and aging period) shown in Table 2. Thereafter, the test surface and the grounding surface were polished to #400. The hardness of this test piece was measured with a Rockwell scale C.

### <Test for examining Mirror surface finishing properties>

A platy test piece having dimensions of 50 mm × 45 mm × 12 mm was produced from each heat-treated bar material, and this test piece was polished to #8000 by mechanical polishing. The polished surface of this test piece was examined for surface roughness Ry in accordance with JIS B0633.

### <Test for determining Corrosion Resistance>

A round-bar test piece having a diameter of 10 mm and a length of 50 mm was produced from each heat-treated bar material. This test piece was subjected to an exposure test in which the test piece was placed for 3 days so that the test piece was under a roof and kept out of rain but was in contact with the outside air (about 10-15°C). The areal proportion of the resultant rust in the surface of the test piece was determined.

### <Test for determining Coefficient of Thermal Conductivity>

The coefficient of thermal conductivity was determined by the following laser flash method. Specifically, the coefficient of thermal conductivity λ can be determined by measuring the specific heat Cp and thermal diffusivity α of a sample and calculating the coefficient of thermal conductivity λ in the following manner using the density ρ which has been determined separately. Namely, laser light is irradiated upon the front surface of the sample (sample weight, M; sample thickness, L) to impart heat energy Q thereto, and the resultant change in temperature ΔT of the back surface of the sample is determined with a thermocouple. The specific heat Cp of the sample is calculated using Cp=Q/(M×ΔT) [J/(kg·K)]. Furthermore, the time period required for the sample to be heated to a half of the maximum temperature change of the sample (t1/2) is measured by means of an infrared ray detector disposed on the front-surface side of the sample. The thermal diffusivity α of the sample is calculated using α=0.1388×L2/(t1/2) [m²/s]. Thus, the coefficient of thermal conductivity λ of the sample can be calculated using λ=Cp×α×ρ [W/m·K]. The values of the coefficient of thermal conductivity in Table 3, which will be given later, are values obtained when the found value of the coefficient of thermal conductivity for comparative steel 1 was taken as 100.

### <Test for measuring Impact Value>

A test was conducted by the method described in JIS Z 2242. Specifically, a test piece was produced by forming a 2-mm U-shaped notch in a square bar material having dimensions of 10 mm × 10 mm × 55 mm, and was examined for impact value at room temperature.

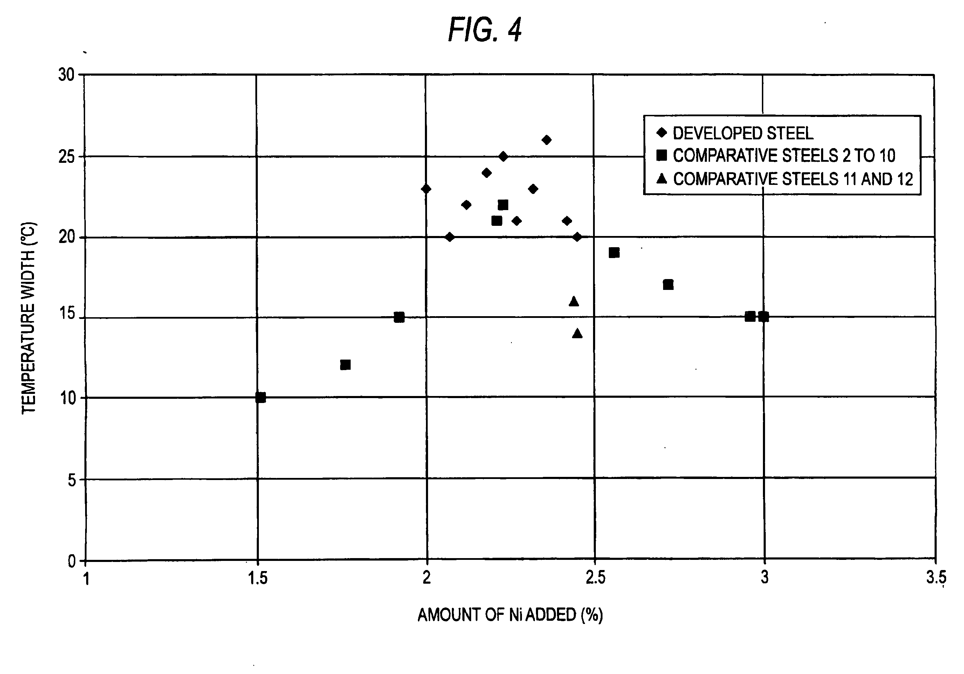

In Table 1 are shown the chemical compositions of developed steels (steels of the invention) and comparative steels. In Table 2 are shown the heat treatment conditions used for the developed steels and comparative steels. In Table 3 are shown the results of the various tests. In Fig. 4 are shown relationships between the amount of nickel added and the width of aging temperatures in the developed steels and comparative steels.

As Fig. 4 shows, it can be seen that when the amount of nickel added was in the range of 2.00-2.45%, the width of temperatures which had resulted in a hardness of 36-42 HRC was 20°C or more. Namely, when the amount of nickel added is 2.00-2.45%, the effect of widening the range of usable aging temperatures is obtained.

| Steel No. | C | Si | Mn | P | Cr | Cu | Ni | Mo | Mo/Ni | Al | O | N | Other(s) |
|---|---|---|---|---|---|---|---|---|---|---|---|---|---|
| Developed Steel 1 | 0.10 | 0.23 | 0.44 | 0.087 | 2.74 | 0.90 | 2.32 | 0.31 | 0.13 | 0.65 | 0.0032 | 0.0076 | |
| Developed Steel 2 | 0.11 | 0.39 | 0.43 | 0.026 | 2.35 | 0.68 | 2.12 | 0.24 | 0.11 | 0.76 | 0.0048 | 0.0065 | Ti=0.10%, Ca=0.05% |
| Developed Steel 3 | 0.12 | 0.34 | 0.54 | 0.091 | 2.41 | 0.72 | 2.45 | 0.28 | 0.11 | 0.87 | 0.0012 | 0.0089 | |
| Developed Steel 4 | 0.09 | 0.25 | 0.56 | 0.045 | 2.98 | 0.83 | 2.18 | 0.34 | 0.16 | 0.71 | 0.0036 | 0.0042 | S=0.054%, Pb=0.10%, Bi=0.10% |
| Developed Steel 5 | 0.11 | 0.24 | 0.57 | 0.007 | 2.04 | 0.63 | 2.27 | 0.36 | 0.16 | 0.62 | 0.0024 | 0.0032 | |
| Developed Steel 6 | 0.10 | 0.40 | 0.41 | 0.052 | 2.56 | 0.79 | 2.36 | 0.22 | 0.09 | 0.81 | 0.0056 | 0.0056 | V=0.07%, Nb=0.20%, Ta=0.1 S% |
| Developed Steel 7 | 0.12 | 0.27 | 0.47 | 0.063 | 2.67 | 0.76 | 2.00 | 0.22 | 0.11 | 0.74 | 0.0076 | 0.0012 | |
| Developed Steel 8 | 0.13 | 0.20 | 0.60 | 0.074 | 2.82 | 0.60 | 2.07 | 0.37 | 0.18 | 0.69 | 0.0096 | 0.0023 | Se=0.2%, Te=0.1 %, Zr=0.10% |
| Developed Steel 9 | 0.13 | 0.31 | 0.48 | 0.034 | 2.11 | 0.86 | 2.42 | 0.27 | 0.11 | 0.89 | 0.0027 | 0.0048 | |
| Developed Steel 10 | 0.09 | 0.37 | 0.51 | 0.012 | 2.27 | 0.81 | 2.23 | 0.40 | 0.18 | 0.78 | 0.0085 | 0.0045 | |
| Comparative Steel 1 | 0.38 | 0.90 | 0.45 | 0.032 | 13.02 | 0.07 | 0.12 | 0.11 | 0.92 | 0.02 | 0.0034 | 0.0028 | |
| Comparative Steel 2 | 0.07 | 1.20 | 0.50 | 0.009 | 4.00 | 0.45 | 3.00 | 1.00 | 0.33 | 1.00 | 0.0046 | 0.0035 | |
| Comparative Steel 3 | 0.11 | 0.24 | 0.51 | 0.013 | 1.87 | 0.78 | 2.23 | 0.25 | 0.11 | 0.67 | 0.0056 | 0.0045 | |
| Comparative Steel 4 | 0.12 | 0.28 | 0.49 | 0.014 | 3.56 | 0.81 | 2.21 | 0.27 | 0.12 | 0.71 | 0.0041 | 0.0051 | |
| Comparative Steel 5 | 0.11 | 0.37 | 0.52 | 0.014 | 2.31 | 0.79 | 1.92 | 0.37 | 0.19 | 0.75 | 0.0017 | 0.0023 | |
| Comparative Steel 6 | 0.12 | 0.36 | 0.51 | 0.013 | 2.28 | 0.81 | 1.76 | 0.35 | 0.20 | 0.74 | 0.0034 | 0.0036 | |
| Comparative Steel 7 | 0.11 | 0.38 | 0.51 | 0.012 | 2.27 | 0.77 | 1.51 | 0.39 | 0.26 | 0.81 | 0.0042 | 0.0056 | |
| Comparative Steel 8 | 0.10 | 0.37 | 0.53 | 0.013 | 2.26 | 0.79 | 2.56 | 0.38 | 0.15 | 0.76 | 0.0025 | 0.0041 | |
| Comparative Steel 9 | 0.10 | 0.37 | 0.52 | 0.013 | 2.27 | 0.78 | 2.72 | 0.36 | 0.13 | 0.77 | 0.0031 | 0.0033 | |
| Comparative Steel 10 | 0.11 | 0.38 | 0.51 | 0.012 | 2.28 | 0.79 | 2.96 | 0.37 | 0.13 | 0.75 | 0.0039 | 0.0035 | |
| Comparative Steel 11 | 0.11 | 0.34 | 0.52 | 0.083 | 2.32 | 0.75 | 2.44 | 0.20 | 0.08 | 0.85 | 0.0036 | 0.0084 | |
| Comparative Steel 12 | 0.12 | 0.33 | 0.53 | 0.087 | 2.34 | 0.71 | 2.45 | 0.12 | 0.05 | 0.83 | 0.0024 | 0.0078 | |

| Steel No. | Solution heat treatment temperature (°C) | Aging temperature (°C) | Time (hr) |
|---|---|---|---|
| Developed Steel 1 | 850 | 521 | 8 |
| Developed Steel 2 | 910 | 545 | 8 |
| Developed Steel 3 | 890 | 543 | 8 |
| Developed Steel 4 | 860 | 525 | 8 |
| Developed Steel 5 | 940 | 533 | 8 |
| Developed Steel 6 | 910 | 554 | 8 |
| Developed Steel 7 | 920 | 558 | 8 |
| Developed Steel 8 | 870 | 523 | 8 |
| Developed Steel 9 | 930 | 562 | 8 |
| Developed Steel 10 | 880 | 546 | 8 |
| Comparative Steel 1 | 1030 | 510 | 2 |
| Comparative Steel 2 | 870 | 543 | 8 |
| Comparative Steel 3 | 870 | 523 | 8 |
| Comparative Steel 4 | 860 | 515 | 8 |
| Comparative Steel 5 | 880 | 512 | 8 |
| Comparative Steel 6 | 880 | 514 | 8 |
| Comparative Steel 7 | 880 | 513 | 8 |
| Comparative Steel 8 | 880 | 538 | 8 |
| Comparative Steel 9 | 880 | 536 | 8 |
| Comparative Steel 10 | 880 | 537 | 8 |
| Comparative Steel 11 | 890 | 543 | 8 |
| Comparative Steel 12 | 890 | 543 | 8 |

| Steel No. | Temperature width (°C) | Hardness (HRC) | Mirror surface finishing properties Ry (µm) | Corrosion resistance (%) | Coefficient of thermal conductivity | Impact value (J/cm²) |
|---|---|---|---|---|---|---|
| Developed Steel 1 | 23 | 41.2 | 0.0542 | 6 | 121 | 38 |
| Developed Steel 2 | 22 | 41.9 | 0.0534 | 8 | 124 | 41 |
| Developed Steel 3 | 20 | 38.9 | 0.0512 | 5 | 118 | 43 |
| Developed Steel 4 | 24 | 40.2 | 0.0503 | 9 | 119 | 45 |
| Developed Steel 5 | 21 | 41.5 | 0.0521 | 7 | 123 | 37 |
| Developed Steel 6 | 26 | 39.8 | 0.0552 | 4 | 127 | 42 |
| Developed Steel 7 | 23 | 36.1 | 0.0581 | 7 | 123 | 41 |
| Developed Steel 8 | 20 | 40.1 | 0.0562 | 5 | 124 | 43 |
| Developed Steel 9 | 21 | 37.8 | 0.0522 | 6 | 128 | 41 |
| Developed Steel 10 | 25 | 39.2 | 0.0556 | 5 | 121 | 45 |
| Comparative Steel 1 | — | 52.1 | 0.0334 | 0 | 100 | 16 |
| Comparative Steel 2 | 15 | 39.2 | 0.0556 | 4 | 102 | 18 |
| Comparative Steel 3 | 22 | 40.3 | 0.0532 | 15 | 114 | 43 |
| Comparative Steel 4 | 21 | 39.7 | 0.0546 | 3 | 105 | 37 |
| Comparative Steel 5 | 15 | 39.1 | 0.0552 | 5 | 121 | 34 |
| Comparative Steel 6 | 12 | 38.2 | 0.0568 | 6 | 123 | 37 |
| Comparative Steel 7 | 10 | 36.9 | 0.0573 | 5 | 125 | 41 |
| Comparative Steel 8 | 18 | 39.3 | 0.0554 | 5 | 124 | 33 |
| Comparative Steel 9 | 17 | 39.4 | 0.0561 | 6 | 122 | 38 |
| Comparative Steel 10 | 15 | 39.2 | 0.0543 | 4 | 123 | 35 |
| Comparative Steel 11 | 16 | 38.8 | 0.0502 | 5 | 117 | 37 |
| Comparative Steel 12 | 14 | 39.2 | 0.0508 | 6 | 119 | 38 |

The following can be found from Tables 1 to 3 and Fig. 4. Comparative steel 1 has a carbon content higher than the upper limit of the range specified in the invention. Because of this, comparative steel 1 has too high a hardness and a low impact value. In addition, comparative steel 1 has silicon and chromium contents higher than the upper limits of the ranges specified in the invention. Comparative steel 1 hence has a relatively low coefficient of thermal conductivity. Incidentally, since comparative steel 1 had extremely low nickel and molybdenum contents, the temperature width was unable to be determined.

Comparative steel 2 has a silicon content higher than the upper limit of the range specified in the invention and, hence, has a low coefficient of thermal conductivity. Furthermore, since comparative steel 2 has nickel and aluminum contents higher than the upper limits of the ranges specified in the invention, the impact value thereof is low.

Comparative steel 3 has a chromium content lower than the lower limit of the range specified in the invention and, hence, gave poor results concerning corrosion resistance.

Comparative steel 4 has a chromium content higher than the upper limit of the range specified in the invention and, hence, has a low coefficient of thermal conductivity.

Comparative steels 5 to 7 each have a nickel content lower than the lower limit of the range specified in the invention and, hence, did not produce the effect of widening the range of usable aging temperatures.

Comparative steels 8 to 10 each have a nickel content higher than the upper limit of the range specified in the invention. Consequently, the effect of widening the range of usable aging temperatures was not obtained.

Comparative steel 11 has a value of Mo/Ni outside the range specified in the invention although the steel has nickel and molybdenum contents within the ranges specified in the invention. Consequently, the effect of widening the range of usable aging temperatures was not obtained.

Comparative steel 12 has a molybdenum content and a value of Mo/Ni which are outside the ranges specified in the invention although the steel has a nickel content within the range specified in the invention. Consequently, the effect of widening the range of usable aging temperatures was not obtained.

In contrast to these comparative steels, all the developed steels gave satisfactory results with respect to each of mirror surface finishing properties, corrosion resistance, thermal conductivity, and impact resistance. Furthermore, the effect of widening the range of usable aging temperatures was obtained. It was thus ascertained that the range of aging temperatures usable for obtaining an adequate hardness is wide.

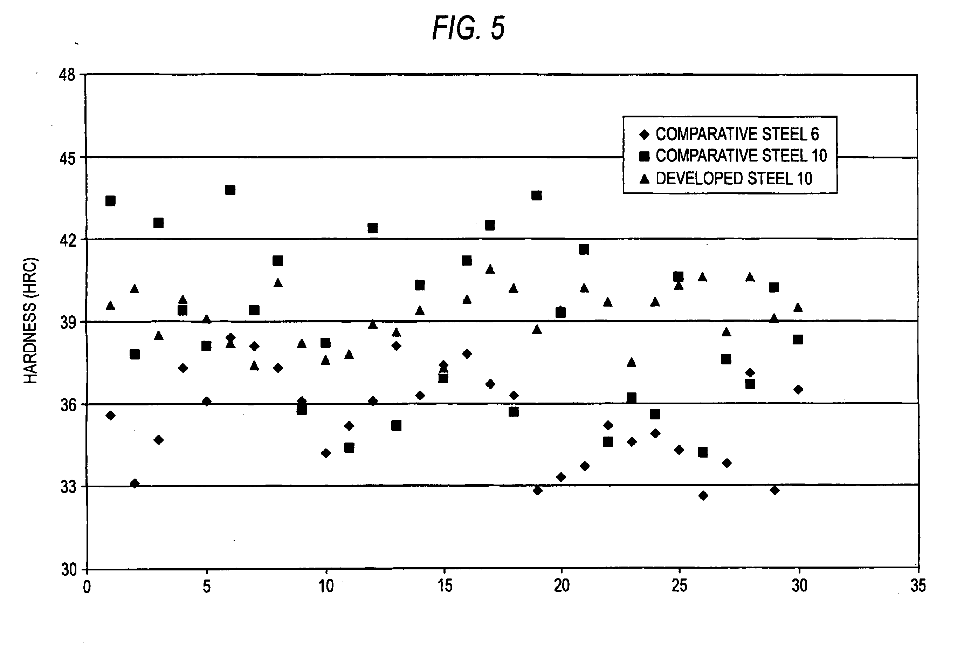

Separately from the tests described above, a test was conducted in which comparative steel 6, comparative steel 10, and developed steel 10 were examined for the unevenness in hardness of molds obtained therefrom through an aging treatment. Specifically, thirty cubic test pieces having a side length of 10 mm were cut out of each heat-treated bar material, and subjected to an 8-hour aging treatment for obtaining a hardness of 39 HRC as a target value. The test surface and grounding surface of each aged test piece were polished to #400, and this test piece was examined with a Rockwell scale C. Fig. 5 shows the hardness values and the test Nos. The abscissa in Fig. 5 indicates the test Nos. of the test pieces. As Fig. 5 shows, comparative steel 6 and comparative steel 10 have high unevenness in hardness after the aging treatment. In contrast, developed steel 10 has low unevenness in hardness after the aging treatment.

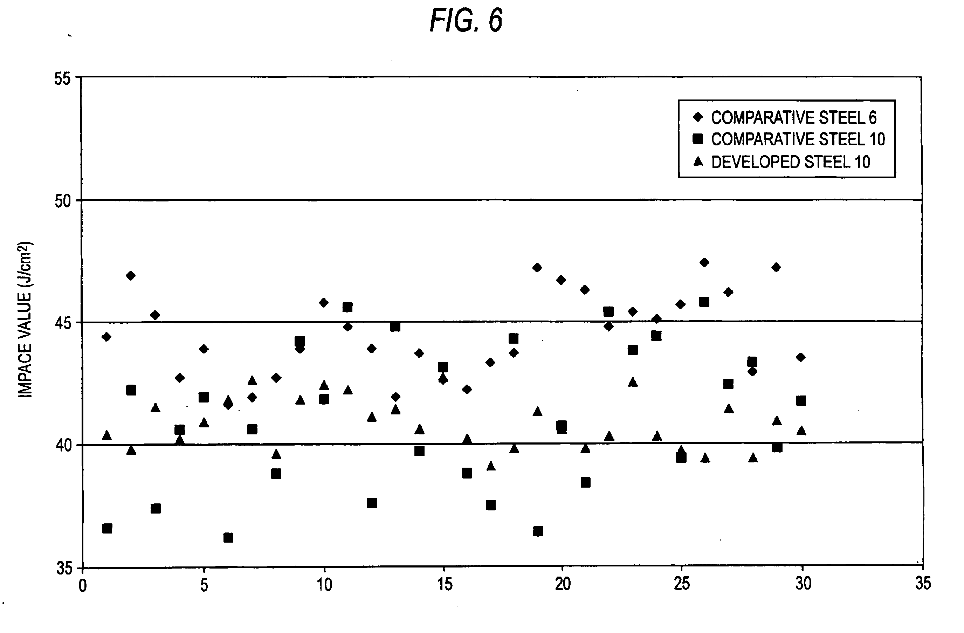

Furthermore, a test was separately conducted in which comparative steel 6, comparative steel 10, and developed steel 10 were examined for the unevenness in impact value of molds obtained therefrom through an aging treatment. Specifically, thirty test pieces were produced and examined for impact value in the same manner as in the impact value test. Fig. 6 shows the impact values and the test Nos. The abscissa in Fig. 6 indicates the test Nos. of the test pieces. As Fig. 6 shows, comparative steel 6 and comparative steel 10 have high unevenness in impact value after the aging treatment. In contrast, developed steel 10 has low unevenness in impact value after the aging treatment.

It has been ascertained from the results given above that according to the prehardened steel of the invention, molds which have reduced unevenness in both hardness and impact value after an aging treatment are obtained. Consequently, it can be considered that when those developed steels are used as materials for molds for plastic molding, molds which have little unevenness in hardness after an aging treatment and which are excellent in terms of mirror surface finishing properties, corrosion resistance, thermal conductivity, and impact resistance are obtained.

Embodiments and Examples of the invention were explained above. The invention should not be construed as being particularly limited to the embodiments or Examples, and can be variously modified.

## Claims

1. A prehardened steel for molds for plastic molding, the steel containing, in terms of % by mass:
C: 0.09-0.13%,
Si: 0.20-0.40%,
Mn: 0.40-0.60%,
Cr: 2.00-3.00%,
Cu: 0.60-0.90%,
Ni: 2.00-2.45%,
Mo: 0.20-0.40%, wherein Mo/Ni ≥ 0.09, and
Al: 0.60-0.90%
and optionally comprising:
P: up to 0.100%,
O: up to 0.0100%,
N: up to 0.0100%,
S: 0.001-0.10%
Se: 0.001-0.3%
Te: 0.001-0.3%
Ca: 0.0002-0.10%
Pb: 0.001-0.20%,
Bi: 0.001-0.30%.
V: 0.01-0.10%
Nb: 0.001-0.30%
Ta: 0.001-0.30%
Ti: up to 0.20%, and
Zr: 0.001-0.30%.
the remainder being Fe and unavoidable impurities.

2. Use of the prehardened steel of claim 1, for the manufacture of a mold for plastic molding.

3. The use of claim 2, comprising regulating the hardness of the prehardened steel to the range 36-42 HRC.

4. The use of claim 3, comprising overaging the steel.

## Patentansprüche

1. Vorgehärteter Stahl für Formen zum Formen von Kunststoff, wobei der Stahl, in Masse-% ausgedrückt, folgendes enthält:
C: 0,09 - 0,13 %,
Si : 0,20 - 0,40 %
Mn : 0,40 - 0,60 %,
Cr : 2,00 - 3,00 %
Cu : 0,60 - 0,90 %
Ni : 2,00 - 2,45 %
Mo : 0,20 - 0,40 %, wobei Mo/Ni ≥0,09 und
Al : 0,60 - 0,90 %
und wahlweise umfassend:
P: bis zu 0,100 %,
O : bis zu 0,0100 %,
N: bis zu 0,0100 %,
S: 0,001 - 0,10 %,
Se: 0,001 - 0,3 %,
Te: 0,001 - 0,3 %
Ca 0,0002 - 0,10 %,
Pb: 0,001 - 0,20 %,
Bi: 0,001 - 0,30 %,
V: 0,01 - 0,10 %,
Nb: 0,001 - 0,30 %,
Ta: 0,001 - 0,30 %,
Ti: bis zu 0,20 % und
Zr: 0,001 - 0,30 %,
wobei der Rest aus Fe und unvermeidlichen Verunreinigungen besteht.

2. Verwendung des vorgehärteten Stahls gemäß Anspruch 1, zur Herstellung einer Form zum Formen von Kunststoff.

3. Verwendung gemäß Anspruch 2, umfassend das Regulieren der Härte des vorgehärteten Stahls auf den Bereich von 36 - 42 HRC.

4. Verwendung gemäß Anspruch 3, umfassend das Überaltern des Stahls.

## Revendications

1. Acier prédurci pour des moules pour moulage de plastique, l'acier contenant, en termes de pourcentage massique :
C: 0,09-0,13%,
Si: 0,20-0,40%,
Mn: 0,40-0,60%,
Cr: 2,00-3,00%,
Cu: 0,60-0,90%,
Ni: 2,00-2,45%,
Mo: 0,20-0,40%, dans lequel Mo/Ni ≥ 0,09, et
Al: 0,60-0,90%
et comprenant optionnellement :
P: jusqu'à 0,100%,
O: jusqu'à 0,0100%,
N: jusqu'à 0,0100%,
S: 0,001-0,10%
Se: 0,001-0,3%
Te: 0,001-0,3%
Ca: 0,0002-0,10%
Pb: 0,001-0,20%,
Bi: 0,001-0,30%,
V: 0,01-0,10%
Nb: 0,001-0,30%
Ta: 0,001-0,30%
Ti: jusqu'à 0,20%, et
Zr: 0,001-0,30%,
le reste étant du Fe et des impuretés inévitables.

2. Utilisation de l'acier prédurci de la revendication 1, pour la fabrication d'un moule pour moulage de plastique.

3. Utilisation de la revendication 2, comprenant de réguler la dureté de l'acier prédurci dans la plage de 36-42 HRC.

4. Utilisation de la revendication 3, comprenant de survieillir l'acier.
